# EUROPEAN PATENT SPECIFICATION

(11) **EP 2 108 568 B1**
(45) Date of publication and mention of the grant of the patent: **06.04.2011**
(21) Application number: 08738581.1
(22) Date of filing: 14.04.2008
(51) Int. Cl.: B62D 25/04

(54) **STRUCTURE FOR SIDE PORTION OF VEHICLE BODY**
STRUKTUR FÜR EIN SEITENTEIL EINES FAHRZEUGKÖRPERS
STRUCTURE POUR PARTIE LATÉRALE DE CHÂSSIS DE VÉHICULE

(30) Priority: 18.06.2007 JP 2007159686
(43) Date of publication of application: 14.10.2009
(73) Proprietor: Honda Motor Co., Ltd., Minato-ku Tokyo 107-8556 (JP)
(72) Inventor: YASUKATA, Hitomi, Wako-shi, Saitama, 351-0193 (JP); IMAMURA, Shogo, Wako-shi, Saitama, 351-0193 (JP)
(74) Representative: Trossin, Hans-Jürgen
(86) International application number: PCT/JP2008/000975
(87) International publication number: WO 2008/155871

(56) References cited:
- GB-A- 2 293 354
- JP-A- 7 267 140
- JP-A- 2007 055 494
- US-A- 5 671 968

## Description

### TECHNICAL FIELD

The present invention relates to a vehicle body side structure, and in particular to a structure for a part that joins a center pillar member with a side sill member on each side of a vehicle body.

### BACKGROUND OF THE INVENTION

A vehicle body side structure typically comprises a center pillar member and a side sill member, and it is known to spot weld a lower part of the center pillar member to the side sill member. See Japanese patent laid open publication No. 07-267140, for instance.

The part that joins a center pillar member with a side sill member is subjected to a large load at the time of a side impact so that a relatively thick steel sheet metal is used for the center pillar member and side sill member and the two members are spot welded to each other at a large number of points to withstand such a load.

However, an increased thickness of the material means an increase in the weight of the vehicle body, and a large number of points for spot welding means an increase in the manufacturing cost. US 5 671 968 A discloses a vehicle body side structure according to the preamble part of claim 1, wherein a lower end of a center pillar is welded to a side sill member. The conventional center pillar includes a strength discontinuity portion adapted to undergo controlled deformation towards the inside direction of the vehicle in case of a side impact.

### BRIEF SUMMARY OF THE INVENTION

In view of such problems of the prior art, a primary object of the present invention is to provide a vehicle body which demonstrates a required resistance to a side impact without using sheet metal of increased thickness or increasing the number of points for spot welding.

According to the present invention, such an object can be accomplished by providing a vehicle body side structure according to claim 1.

US 5 671 968 A discloses a vehicle body side structure according to the preamble part of claim 1, wherein a lower end of a center pillar is welded to a side sill member. The conventional center pillar includes a strength discontinuity portion adapted to undergo controlled deformation towards the inside direction of the vehicle in case of a side impact.

According to such a structure of the present invention, upon receiving a side impact, the wavy shaped cross section part which is provided near the part that joins a center pillar member with a side sill member on each side of a vehicle body is allowed to elongate, for instance in the vertical direction, so that the impact load is favorably absorbed. Thereby, the load acting on the welded part between the center pillar member and side sill member is reduced with the result that the required resistance to a side impact can be achieved without increasing the thickness of the material for these members or increasing the number of points for spot welding.

The center pillar member is typically made of sheet metal, and the wavy shaped cross section part comprises a bead which typically consists of an elongated bulge having a semi-circular cross section. However, the wavy shaped cross section part may consist of any feature that permits a preferential elongation in a vertical direction. According to the invention, the lower end of the center pillar is spot welded to the side sill member at an array of points arranged along a horizontal line. Further, the bead extends in parallel with the array of spot welded points. Also, the wavy shaped cross section part may comprise a pair of beads which extend in parallel with the array of spot welded points. Typically, the center pillar member comprises a center pillar stiffener, and the side sill member comprise a side sill stiffener.

According to a preferred embodiment of the present invention, the bead has a length smaller than a width of the corresponding part of the center pillar member and the center pillar member includes a ridge line extending substantially vertically between each end of the bead and an adjacent edge of the center pillar member. Thereby, the ridge lines that are effective in reinforcing the center pillar against buckling and bending deformation may be left unaffected by the bead so that the mechanical strength of the center pillar member is prevented from being compromised by the provision of the bead.

### BRIEF DESCRIPTION OF THE DRAWING

Now the present invention is described in the following with reference to the appended drawings, in which:
Figure 1 is a general side view of a vehicle body embodying the vehicle body side structure of the present invention;
Figure 2 is an exploded perspective view of the vehicle body;
Figure 3 is a vertical sectional view of a center pillar portion of the vehicle body;
Figure 4 is a fragmentary enlarged side view of a part where the center pillar stiffener lower is welded to the side sill stiffener; and
Figure 5 is a fragmentary enlarged vertical sectional view of a part of Figure 4.

### DETAILED DESCRIPTION OF THE PREFERRED EMBODIMENTS

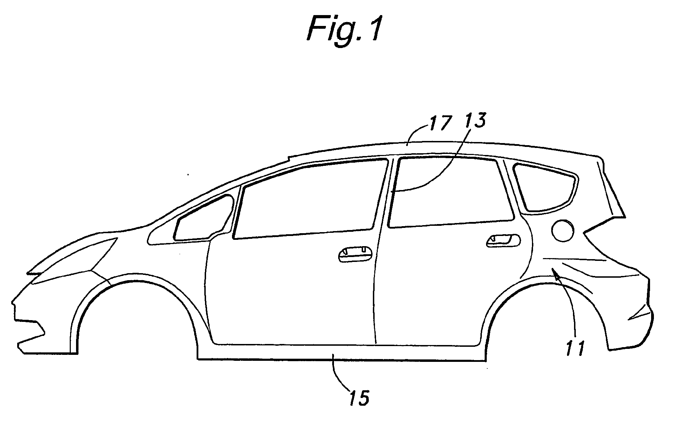

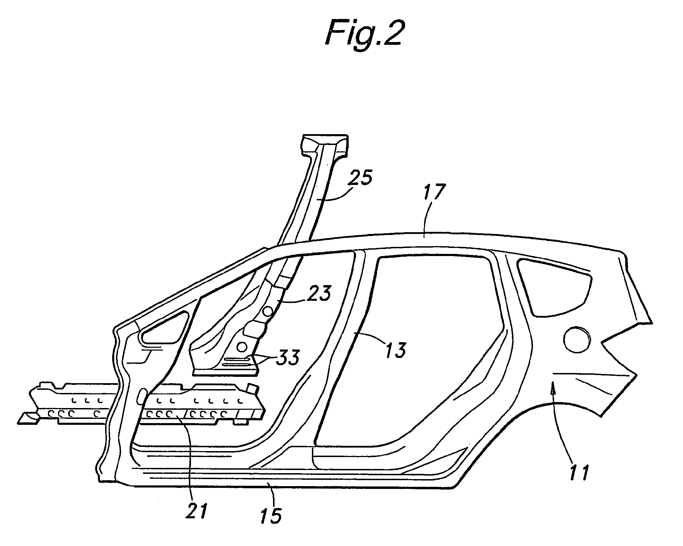

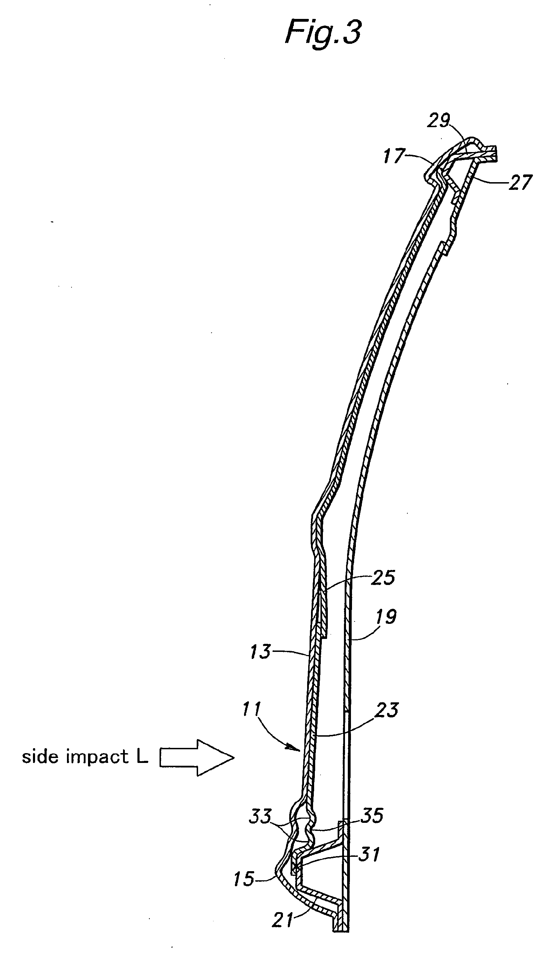

A vehicle body side structure embodying the present invention is now described in the following with reference to Figures 1 to 5.

Figures 1 to 3 generally illustrates the vehicle body side structure according to the present invention. In these drawings, numeral 11 denotes an outer side panel 11, numeral 13 denotes a center pillar portion of the outer side panel 11, numeral 15 denotes an outer sill portion of the outer side panel 11, numeral 17 denotes a side roof portion of the outer side panel 11, numeral 19 denotes a center pillar inner, numeral 21 denotes a side sill stiffener, numeral 23 denotes a center pillar stiffener lower, numeral 25 denotes a center pillar stiffener upper, numeral 27 denotes a roof side rail, and numeral 29 denotes a roof side stiffener.

The center pillar inner 19 is spot welded to the side sill stiffener 21 at a lower part thereof and to the roof side rail 27 at an upper part thereof. The side sill stiffener 21 is also spot welded to the side sill portion 15 of the outer side panel 11. The roof side stiffener 29 is spot welded to an upper part of the roof side rail 27. The center pillar stiffener lower 23 is spot welded to the side sill stiffener 21 at a lower part thereof and to a lower part of the center pillar stiffener upper 25 at an upper part thereof. The center pillar stiffener upper 25 is spot welded to the roof side stiffener 29 at an upper part thereof.

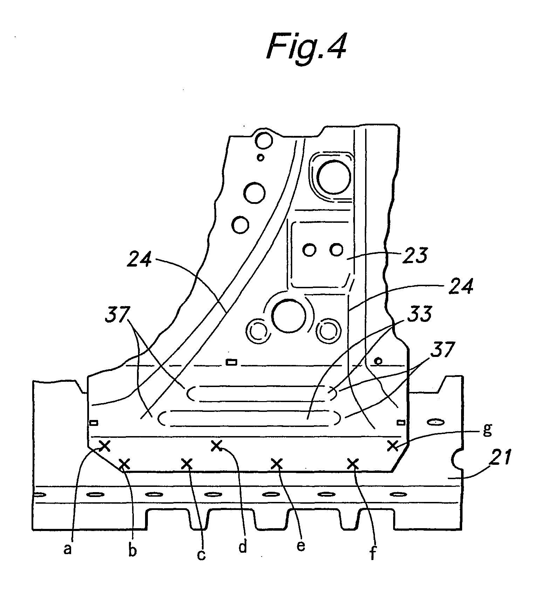

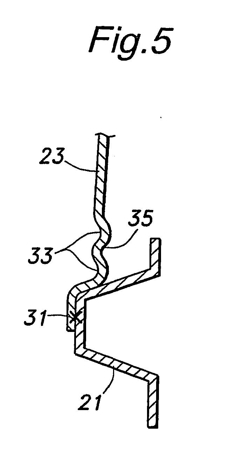

Figures 4 and 5 show an essential part of the vehicle body side structure of the present invention which includes the welding structure between the center pillar stiffener lower 23 and side sill stiffener 21, and the structure of the center pillar stiffener lower 23. The side sill stiffener 21 consists of a channel member with an open end facing the center pillar inner 19. The center pillar stiffener lower 23 extends substantially perpendicular to the side sill stiffener 21, and also consists of a channel member, at least in a lower part thereof, with an open end facing the center pillar inner 19.

From the lower end of the center pillar stiffener lower 23 (forming a part of the center pillar) depends a flange portion which is attached to the side sill stiffener 21 (forming a part of the side sill), in particular the bottom side of the channel shaped cross section thereof, by spot welding at a plurality of welding points a to g arranged along a horizontal line. In Figure 5, numeral 31 denotes one of the welding points between the side sill stiffener 21 and center pillar stiffener lower 23. Because the part of the center pillar stiffener lower 23 extending above the depending flange is provided with a channel shaped cross section, a pair of ridge lines 24 extend along either side of the corresponding part of the center pillar stiffener lower 23.

A pair of beads 33 are stamp formed in a lower end of the center pillar stiffener lower 23. These beads 33 may be formed at the same time as the overall stamp forming of the center pillar stiffener lower 23 as an emboss pressing process.

The beads 33 extend along the array of the welding points a to g between the side sill stiffener 21 and center pillar stiffener lower 23 or linearly and horizontally in the fore-and-aft direction of the vehicle body.

In the illustrated embodiment, the beads 33 extend horizontally as a pair of beads that are parallel to each other in a vertically proximate and spaced relationship. The beads 33 are each embossed so as to have a semicircular cross section, and form a bellows-like wavy shaped cross section part 35 in a lower end part of the center pillar stiffener lower 23.

More specifically, the beads 33 extend in a widthwise direction (fore-and-aft direction) of the center pillar stiffener lower 23. Each bead 33 is shorter in length than the with of the corresponding flat part (or the part extending between the ridge lines 24) of the center pillar stiffener lower 23 so that an area of a flat surface 37 free from such beads is defined between each end of each bead 33 and the opposing ridge line 24 of the center pillar stiffener lower 23.

According to the vehicle body side structure described above, upon receiving a side impact L, the lower end part of the center pillar stiffener lower 23 or the wavy shaped cross section part 35 formed by the beads 33 near the spot welded area 31 (welding points) between the side sill stiffener 21 and center pillar stiffener lower 23 elongates in a vertical direction.

The elongation of the wavy shaped cross section part absorbs the side impact load, and reduces the side impact load L applied to the spot welded area 31 between the side sill stiffener 21 and center pillar stiffener lower 23. This provides an adequate protection against a side impact without increasing the thickness of the side sill stiffener 21 and center pillar stiffener lower 23 or increasing the number of welding points between the side sill stiffener 21 and center pillar stiffener lower 23.

In particular, because the beads 33 extend along the array of the welding points between the side sill stiffener 21 and center pillar stiffener lower 23, the elongation of the wavy shaped cross section part 35 can effectively absorb the impact load and protect the spot welded area from excessive loading.

When each bead 33 is shorter in length than the width of the corresponding part of the center pillar stiffener lower 23 so that an area of a flat surface 37 free from such a bead is defined between each end of the bead 33 and the opposing lateral edge of the center pillar stiffener lower 23, a ridge line 24 of the center pillar stiffener lower 23 can be interposed between each lateral edge of the center pillar stiffener lower 23 and opposing ends of the beads 33, and this makes the center pillar stiffener lower 23 adequately resistance to buckling under a vertical load.

Owing to the structure described above, by appropriately determining the lengths of the beads 33 in relation to the width of the center pillar stiffener lower 23, the center pillar stiffener lower 23 can be given with a favorable side impact absorbing property and an adequate buckling resistance against a vertical load without increasing the wall thickness of the center pillar stiffener lower 23. The feature formed by the beads 33 is only exemplary, but may consist of any other wavy shaped cross section part that can vertically elongate with a relative ease as compared to the adjacent part of the vehicle body.

Although the present invention has been described in terms of preferred embodiments thereof, it is obvious to a person skilled in the art that various alterations and modifications are possible without departing from the scope of the present invention which is set forth in the appended claims.

## Claims

1. A vehicle body side structure including a center pillar member (23) on a side part of a vehicle body having a lower end spot welded to a side sill member (21),
**characterized in that** the lower end of the center pillar member (23) is spot welded to the side sill member (21) at an array of points (a-g) arranged along a horizontal line;
a wavy shaped vertical cross section part (33) is provided in a lower end part of the center pillar member (23); and
the wavy shaped cross section part (33) comprises a bead that extends in parallel with the array of spot welded points (a-g).

2. The vehicle body side structure according to claim 1,
wherein the wavy shaped cross section part (33) comprises a pair of beads which extend in parallel with the array of spot welded points.

3. The vehicle body side structure according to claim 1,
wherein the bead (33) has a length smaller than a width of the corresponding part of the center pillar member (23).

4. The vehicle body side structure according to claim 3,
wherein the center pillar member (23) includes a ridge line (24) extending substantially vertically between each end of the bead (33) and an adjacent edge of the center pillar member (23).

5. The vehicle body side structure according to claim 1,
wherein the center pillar member comprise a center pillar stiffener (23), and the side sill member comprises a side sill stiffener (21).

## Patentansprüche

1. Fahrzeugkörperseitenstruktur, umfassend ein Mittelsäulenelement (23) auf einem Seitenteil von einem Fahrzeugkörper, welches ein an ein Seitenschwellerelement (21) punktgeschweißtes unteres Ende hat, **dadurch gekennzeichnet, dass** das untere Ende von dem Mittelsäulenelement (23) an einer Anordnung von Punkten (a-g), welche längs einer horizontalen Linie angeordnet sind, an das Seitenschwellerelement (21) punktgeschweißt ist;
ein wellenförmig ausgebildetes vertikales Querschnittsteil (33) in einem unteren Endteil von dem Mittelsäulenelement (23) vorgesehen ist; und das wellenförmige Querschnittsteil (33) einen Wulst umfasst, welcher sich parallel zu der Anordnung von Punktschweißpunkten (a-g) erstreckt.

2. Fahrzeugkörperseitenstruktur nach Anspruch 1,
wobei der wellenförmig ausgebildete Querschnittsteil (33) ein Paar Wülste umfasst, welche sich parallel zu der Anordnung von Punktschweißpunkten erstrecken.

3. Fahrzeugkörperseitenstruktur nach Anspruch 1,
wobei der Wulst (33) eine Länge hat, welche kleiner als eine Breite von dem entsprechenden Teil von dem Mittelsäulenelement (23) ist.

4. Fahrzeugkörperseitenstruktur nach Anspruch 3,
wobei das Mittelsäulenelement (23) eine Erhöhungslinie (24) umfasst, welche sich im Wesentlichen vertikal zwischen jedem Ende von dem Wulst (33) und einem benachbarten Rand von dem Mittelsäulenelement (23) erstreckt.

5. Fahrzeugkörperseitenstruktur nach Anspruch 1, wobei das Mittelsäulenelement eine Mittelsäulenversteifung (23) umfasst, und das Seitenschwellerelement eine Seitenschwellerversteifung (21) umfasst.

## Revendications

1. Structure latérale de carrosserie de véhicule incluant un organe formant pied milieu (23) sur une partie latérale d'une carrosserie de véhicule comportant une extrémité inférieure soudée par points à un organe formant longeron (21),
**caractérisée en ce que** l'extrémité inférieure de l'organe formant pied milieu (23) est soudée par points à l'organe formant longeron (21) en un réseau de points (a-g) agencés le long d'une droite horizontale ;
une partie de section verticale de forme onduleuse (33) est disposée dans une partie d'extrémité inférieure de l'organe formant pied milieu (23) ; et
la partie de section de forme onduleuse (33) comprend une nervure qui s'étend parallèlement au réseau de points soudés par points (a-g).

2. Structure latérale de carrosserie de véhicule selon la revendication 1,
dans laquelle la partie de section de forme onduleuse (33) comprend une paire de nervures qui s'étendent parallèlement au réseau de points soudés par points.

3. Structure latérale de carrosserie de véhicule selon la revendication 1,
dans laquelle la nervure (33) a une longueur plus petite qu'une largeur de la partie correspondante de l'organe formant pied milieu (23).

4. Structure latérale de carrosserie de véhicule selon la revendication 3,
dans laquelle l'organe formant pied milieu (23) inclut une ligne d'arête (24) s'étendant sensiblement verticalement entre chaque extrémité de la nervure (33) et un bord adjacent de l'organe formant pied milieu (23).

5. Structure latérale de carrosserie de véhicule selon la revendication 1,
dans laquelle l'organe formant pied milieu comprend un raidisseur de pied milieu (23), et l'organe formant longeron comprend un raidisseur de longeron (21).
